# EUROPEAN PATENT SPECIFICATION

(11) **EP 3 925 842 B1**
(45) Date of publication and mention of the grant of the patent: **28.08.2024**
(21) Application number: 20782675.1
(22) Date of filing: 09.03.2020
(51) Int. Cl.: B60W 30/16, B60W 30/02, B60W 30/045, B60W 60/00, B60W 50/00, B60W 30/18, B60W 40/02, B60W 10/20, B60W 10/18, B60W 10/04, B60W 10/00

(54) **TRAVEL CONTROL SYSTEM**
FAHRZEUGBEWEGUNGSSTEUERUNGSSYSTEM
SYSTÈME DE COMMANDE DE DÉPLACEMENT

(30) Priority: 29.03.2019 JP 2019068436
(43) Date of publication of application: 22.12.2021
(73) Proprietor: MAZDA MOTOR CORPORATION, Hiroshima 730-8670 (JP)
(72) Inventor: SAKASHITA, Shinsuke, Aki-gun, Hiroshima 730-8670 (JP); HORIGOME, Daisuke, Aki-gun, Hiroshima 730-8670 (JP); ISHIBASHI, Masato, Aki-gun, Hiroshima 730-8670 (JP); HOJIN, Eiichi, Aki-gun, Hiroshima 730-8670 (JP)
(74) Representative: Frick, Robert
(86) International application number: PCT/JP2020/010057
(87) International publication number: WO 2020/203078

(56) References cited:
- WO-A1-2018/193709
- JP-A- 2005 178 627
- JP-A- 2013 129 328
- JP-A- 2015 221 636
- JP-A- 2015 221 636
- JP-A- 2017 013 644
- JP-A- 2017 013 644
- JP-A- 2018 090 218
- JP-A- 2018 090 218
- JP-A- 2018 176 879

## Description

### TECHNICAL FIELD

The present invention belongs to a technical field related to a motor vehicle cruise controller.

### BACKGROUND ART

There has been a known motor vehicle cruise control device which controls a plurality of vehicle-mounted units for traveling, which are mounted in a motor vehicle.

For example, Patent Document 1 discloses, as a motor vehicle cruise control device, a control system including unit controllers respectively controlling the on-board units, a domain controller controlling the unit controllers as a whole, and an integrated controller controlling the domain controllers as a whole. The control system is divided into a plurality of domains respectively corresponding to the functions of the on-board units in advance. Each of the domains is stratified into a group of the unit controllers and the domain controller. The integrated controller dominates the domain controllers.

In Patent Document 1, the unit controllers each calculate a controlled variable of an associated one of the on-board units, and each output a control signal for achieving the controlled variable to the associated on-board unit. Patent document (WO 2018/193709 A1) also shows a traveling control device.

### CITATION LIST

### PATENT DOCUMENT

Patent Document 1: Japanese Unexamined Patent Publication No. 2017-61278

### SUMMARY OF THE INVENTION

### TECHNICAL PROBLEM

In recent years, development of autonomous driving systems has been promoted nationally. In general, an autonomous driving system acquires information of an out-of-vehicle environment using a camera or any other suitable means, and calculates a route on which the motor vehicle should travel based on the acquired information of the out-of-vehicle environment. Further, in the autonomous driving system, traveling devices are controlled to follow the route to be traveled.

Here, the traveling route is followed through adjustment of physical amounts (a driving force and a steering amount) produced using the associated traveling devices. In this case, to prevent a driver from feeling uncomfortable (e.g., to prevent sudden acceleration and deceleration of a motor vehicle), the physical amounts that provide an optimum motion of the motor vehicle at every moment need to be calculated. Specifically, the processing speed for vehicle behavior control needs to be faster, and the accuracy of the vehicle behavior control needs to be increased. Meanwhile, a control path for vehicle control needs to be as simple as possible.

The present invention was made in view of the problems. It is an object of the present invention to provide a motor vehicle cruise controller that achieves both of a faster processing speed for vehicle behavior control and a simplified control path.

### SUMMARY OF THE INVENTION

To solve the foregoing problem, the present invention is directed to an arithmetic unit for controlling traveling of a motor vehicle. The arithmetic unit includes: a vehicle exterior environment recognition unit configured to recognize a vehicle exterior environment based on an output from an information acquisition unit configured to acquire information of the vehicle exterior environment; a route setting unit configured to set a route to be traveled by the motor vehicle, in accordance with the vehicle exterior environment recognized by the vehicle exterior environment recognition unit; a target motion determination unit configured to determine a target motion of the motor vehicle to follow the route set by the route setting unit; a driving force calculation unit configured to calculate a target physical amount corresponding to a driving force for achieving the target motion, and output the target physical amount calculated to a microcomputer configured to control a driving device, the driving device being configured to produce a driving force; a braking force calculation unit configured to calculate another target physical amount corresponding to a braking force for achieving the target motion, and output the another target physical amount calculated to another microcomputer configured to control a braking device, the braking device being configured to produce a braking force; and a steering controller configured to calculate still another target physical amount corresponding to a steering amount for achieving the target motion, generate a control signal for controlling a steering device configured to produce a steering amount based on the still another target physical amount calculated, directly output the control signal to the steering device, and output, to the driving force calculation unit and the braking force calculation unit, information for use to perform control that allows the steering device to coordinate with the driving and braking devices.

Note that "devices" as used herein indicate devices such as actuators and sensors to be controlled while the motor vehicle is travelling.

In an autonomous driving technology, a possible vehicle controller with a simple configuration is configured such that the functions of microcomputers for controlling devices (actuators, sensors, and other components) for use in autonomous driving are incorporated in a CPU so that the arithmetic and control functions are consolidated into the arithmetic unit, which acquires information from the devices, or directly controls the devices, via an on-board communication network. However, if waiting for an instruction from the arithmetic unit transmitted via the communication network, traveling devices that require fast response (including driving devices such as an engine, braking devices, and steering devices, for example) cannot be controlled in time in some cases. To address this problem, this embodiment has the following features (1), (2), and (3). The feature (1) is that the driving and braking devices are respectively provided with the driving force calculation unit and the braking force calculation unit, which are included in the arithmetic unit to calculate the associated target physical amounts, and the calculated target physical amounts are output to the associated microcomputers respectively configured to control these devices. The feature (2) is that the steering controller configured to output the control signal for the steering device that triggers the vehicle motion is incorporated in the arithmetic unit. The feature (3) is that the steering controller outputs, to the driving force calculation unit and the braking force calculation unit, information for use to perform control that allows the driving and braking devices to coordinate with the steering device. As can be seen, in the present embodiment, incorporating, in the arithmetic unit, the steering controller that outputs the control signal directly to the steering device that triggers the vehicle motion (e.g., an electronic power assist steering (EPAS) device) out of the traveling devices can achieve both of fast response of the traveling devices and simplification of a control path.

In addition, the steering amount of the steering device is directly controlled. This allows the processing speed to be faster than in a situation where the arithmetic unit calculates only the target physical amount, and the arithmetic result is output to, and processed by, the microcomputer for steering amount control.

The present invention is further directed to a motor vehicle cruise control system including the arithmetic unit. The system includes: a driving microcomputer configured to receive an output of the driving force calculation unit to control the driving device; and a braking microcomputer configured to receive an output of the braking force calculation unit to control the braking device. The driving microcomputer and the braking microcomputer are configured to be capable of communicating with each other and to share information for use to perform control that allows the driving device to coordinate with the braking device with each other.

According to this configuration, while control related to steering is incorporated in the arithmetic unit, operations of the driving and braking devices are controlled via the associated microcomputers, which coordinate with each other. Specifically, the arithmetic unit is responsible for steering which is control triggering the motor vehicle motion and which includes a relatively small number of reflective motion elements. Meanwhile, the driving and braking devices that may require reflective motions are controlled using the associated known microcomputers. This can provide optimal control adapted to various scenes and the behavior of the motor vehicle.

### ADVANTAGES OF THE INVENTION

As can be seen from the foregoing description, according to the present invention, a motor vehicle cruise controller can achieve both of fast response of a traveling device and simplification of a control path.

### BRIEF DESCRIPTION OF THE DRAWINGS

FIG. 1 schematically shows a configuration of a motor vehicle which is controlled by a motor vehicle cruise control system according to an exemplary embodiment.
FIG. 2 is a schematic view illustrating a configuration of an engine.
FIG. 3 is a schematic view showing a vehicle equipped with an arithmetic unit.
FIG. 4 is a block diagram showing a control system of a motor vehicle.

### DESCRIPTION OF EMBODIMENTS

An exemplary embodiment will now be described in detail with reference to the drawings. Note that "devices" in the present embodiment indicate devices such as actuators and sensors to be controlled while a motor vehicle 1 is traveling. Although described in detail below, examples of the "devices" include devices related to traveling of the vehicle, such as a combustion injection valve, a spark plug, and a brake actuator.

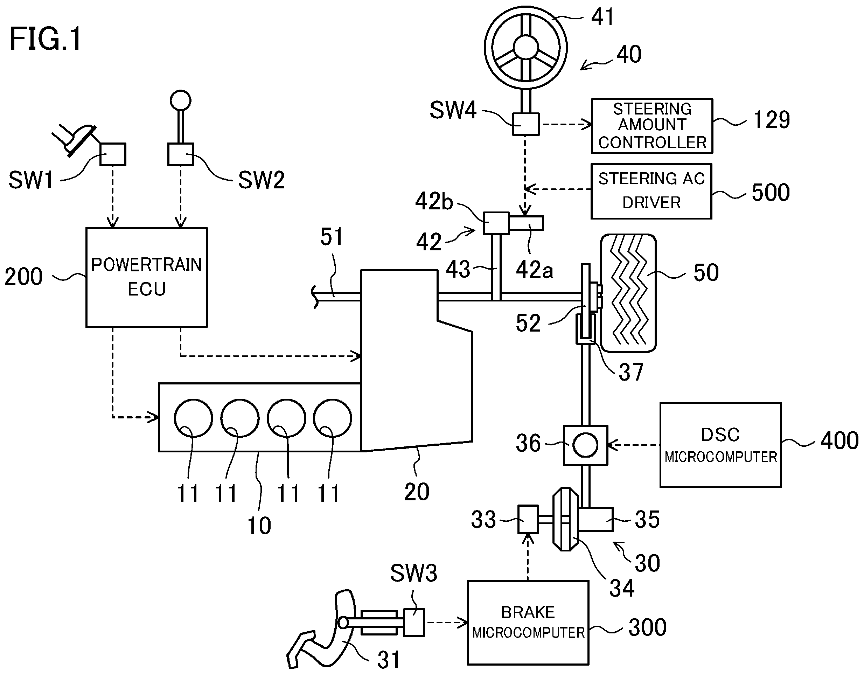

FIG. 1 schematically shows a configuration of a motor vehicle 1 which is controlled by a motor vehicle cruise control system 100 (hereinafter simply referred to as a "cruise control system 100") according to the present embodiment. The motor vehicle 1 is a motor vehicle that allows manual driving in which the motor vehicle 1 runs in accordance with an operation of an accelerator and any other component by a driver, assist driving in which the motor vehicle 1 runs while assisting the operation by the driver, and autonomous driving in which the motor vehicle 1 runs without the operation by the driver.

The motor vehicle 1 includes an engine 10 as a drive source having a plurality of (four in the present embodiment) cylinders 11, a transmission 20 coupled to the engine 10, a brake device 30 that brakes rotation of front wheels 50 serving as driving wheels, and a steering system 40 that steers the front wheels 50 serving as steered wheels.

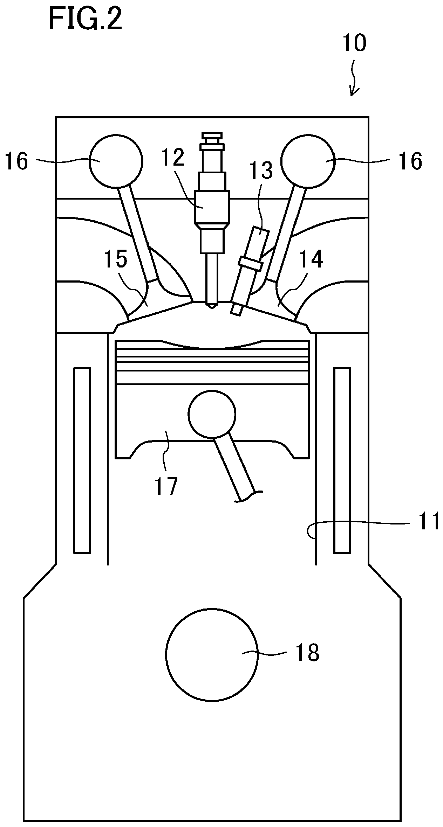

The engine 10 is, for example, a gasoline engine. As shown in FIG. 2, each cylinder 11 of the engine 10 includes an injector 12 configured to supply fuel into the cylinder 11 and a spark plug 13 for igniting an air-fuel mixture of the fuel and intake air supplied into the cylinder 11. In addition, the engine 10 includes, for each cylinder 11, an intake valve 14, an exhaust valve 15, and a valve train mechanism 16 that adjusts opening and closing operations of the intake valve 14 and the exhaust valve 15. In addition, the engine 10 is provided with pistons 17 each configured to reciprocate in the corresponding cylinder 11 and a crankshaft 18 connected to the pistons 17 via connecting rods. Note that the engine 10 may be a diesel engine. In a case of adopting a diesel engine as the engine 10, the spark plug 13 does not have to be provided. The injector 12, the spark plug 13, and the valve train mechanism 16 are examples of devices related to a powertrain (i.e., drive devices).

The transmission 20 is, for example, a stepped automatic transmission. The transmission 20 is arranged on one side of the engine 10 along the cylinder bank. The transmission 20 includes an input shaft (not shown) coupled to the crankshaft 18 of the engine 10, and an output shaft (not shown) coupled to the input shaft via a plurality of reduction gears (not shown). The output shaft is connected to an axle 51 of the front wheels 50. The rotation of the crankshaft 18 is changed by the transmission 20 and transmitted to the front wheels 50. The transmission 20 is an example of the devices related to the powertrain (i.e., drive devices).

The engine 10 and the transmission 20 are powertrain devices that generate a driving force for causing the motor vehicle 1 to travel. The operations of the engine 10 and the transmission 20 are controlled by a powertrain electric control unit (ECU) 200 (equivalent to a driving microcomputer). For example, during the manual driving of the motor vehicle 1, the powertrain ECU 200 controls an injection amount from and a timing for fuel injection by the injector 12, a timing for ignition by the spark plug 13, timings for opening the intake and exhaust valves 14 and 15 by the valve train mechanism 16, and the duration of opening these valves, based on values such as a detected value of an accelerator position sensor SW1 that detects an accelerator position and any other sensor, which correspond to an operation amount of the accelerator pedal by the driver. In addition, during the manual driving of the motor vehicle 1, the powertrain ECU 200 adjusts the gear position of the transmission 20 based on a required driving force calculated from a detection result of a shift sensor SW2 that detects an operation of the shift lever by the driver and the accelerator position. In addition, during the assist driving or the autonomous driving of the motor vehicle 1, the powertrain ECU 200 basically calculates a controlled variable for each drive device (injector 12 and any other component in this case) and outputs a control signal to the corresponding drive device, so as to achieve a target driving force calculated by an arithmetic unit 110 described hereinafter. The powertrain ECU 200 is an example of a device controller.

The brake device 30 includes a brake pedal 31, a brake actuator 33, a booster 34 connected to the brake actuator 33, a master cylinder 35 connected to the booster 34, anti-braking system (ABS) devices 36 that adjust the braking force, and brake pads 37 that actually brake the rotation of the front wheels 50. To the axle 51 of the front wheels 50, disc rotors 52 are provided. The brake device 30 is an electric brake, and actuates the brake actuator 33 in accordance with the operation amount of the brake pedal 31 detected by the brake sensor SW3, to actuate the brake pads 37 via the booster 34 and the master cylinder 35. The brake device 30 clamps the disc rotor 52 by the brake pads 37, to brake the rotation of each front wheel 50 by the frictional force generated between the brake pads 37 and the disc rotor 52. The brake actuator 33 and the ABS devices 36 are examples of devices related to the brake (i.e., braking devices).

The actuation of the brake device 30 is controlled by a brake microcomputer 300 (a braking microcomputer) and a DSC microcomputer 400. For example, during the manual driving of the motor vehicle 1, the brake microcomputer 300 controls the operation amount of the brake actuator 33 based on a detected value from the brake sensor SW3 that detects the operation amount of the brake pedal 31 by the driver, and any other sensor. In addition, the DSC microcomputer 400 controls actuation of the ABS device 36 to add a braking force to the front wheels 50, irrespective of an operation of the brake pedal 31 by the driver. In addition, during the assist driving or the autonomous driving of the motor vehicle 1, the brake microcomputer 300 calculates a controlled variable for each braking device (brake actuator 33 in this case) and outputs a control signal to the corresponding braking device, so as to achieve a target controlling force calculated by the arithmetic unit 110 described hereinafter. The brake microcomputer 300 and the DSC microcomputer 400 are each an example of the device controller. Note that the brake microcomputer 300 and the DSC microcomputer 400 may be configured by a single microcomputer.

The steering system 40 includes a steering wheel 41 to be operated by the driver, an electronic power assist steering (EPAS) device 42 configured to assist the driver in a steering operation, and a pinion shaft 43 coupled to the EPAS device 42. The EPAS device 42 includes an electric motor 42a, and a deceleration device 42b configured to reduce the driving force from the electric motor 42a and transmit the force to the pinion shaft 43. The steering system 40 actuates the EPAS device 42 in accordance with the operation amount of the steering wheel 41, so as to rotate the pinion shaft 43, thereby controlling the front wheels 50. The pinion shaft 43 is coupled to the front wheels 50 through a rack bar (not shown), and the rotation of the pinion shaft 43 is transmitted to the front wheels via the rack bar. The operation amount of the steering wheel 41 is detected by a steering angle sensor SW4 and sent to a steering controller 129 of the arithmetic unit 110. The EPAS device 42 is an example of steering related devices, i.e., steering devices.

During the manual driving of the motor vehicle 1, the steering system 40 is configured such that the operation amount of the electric motor 42a is controlled based on the operation amount of the steering wheel 41. In addition, during the assist driving or the autonomous driving of the motor vehicle 1, a control signal for controlling the steering devices (EPAS device 42 in this case) is output from the steering controller 129 of the arithmetic unit 110 described below to a steering device driver 500. Then, the steering system 40 is configured such that the operation amount of the electric motor 42a is controlled based on the control signal of the steering device driver 500.

Although will be described later in detail, in the present embodiment, the powertrain ECU 200 and the brake microcomputer 300 are configured to be capable of communicating with each other. In the following description, the powertrain ECU 200 and the brake microcomputer 300 may be simply referred to as the "device controllers."

The cruise control system 100 of the present embodiment includes the arithmetic unit 110 that determines motions of the motor vehicle 1 to calculate a route to be traveled by the motor vehicle 1 and follow the route, so as to enable the assist driving and the autonomous driving. The arithmetic unit 110 is a microprocessor configured by one or more chips, and includes a CPU, a memory, and any other component.

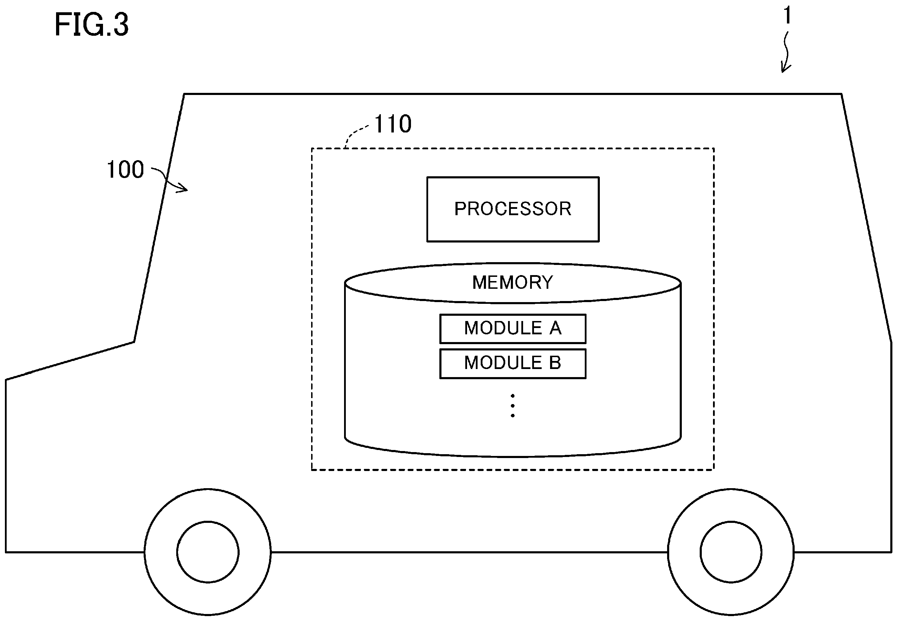

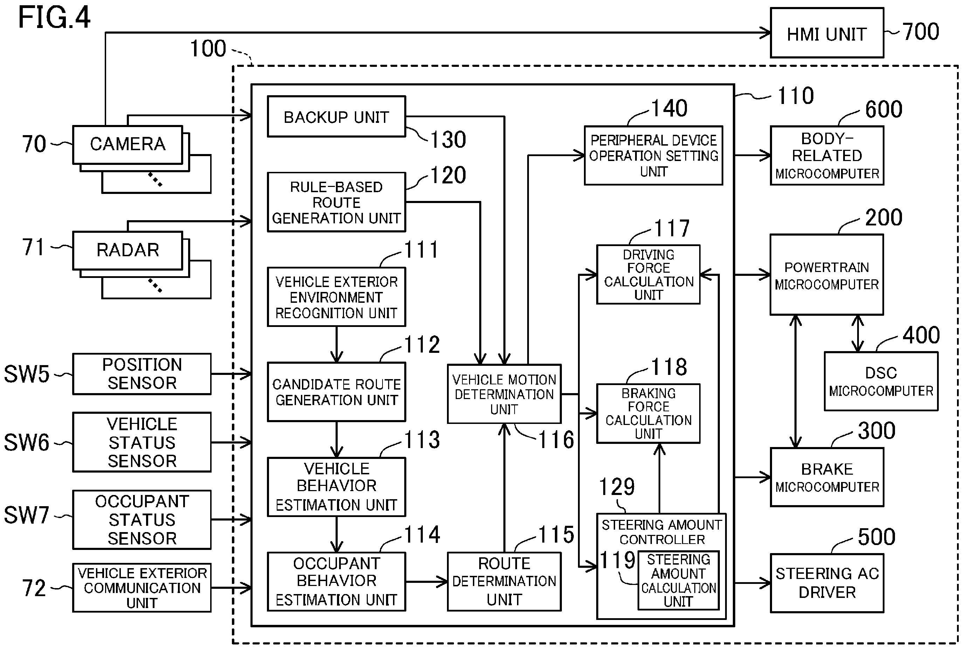

In the exemplary configuration of FIG. 3, the arithmetic unit 110 includes a processor and a memory. The memory stores modules which are each a software program executable by the processor. The functions of units of the arithmetic unit 110 shown in FIG. 4 are achieved, for example, by the processor executing the modules stored in the memory. In addition, the memory stores data of a model for use in the arithmetic unit 110. Note that a plurality of processors and a plurality of memories may be provided.

As shown in FIG. 4, the arithmetic unit 110 determines a target motion of the motor vehicle 1 based on outputs from a plurality of sensors and any other component, and controls actuation of the devices. Note that FIG. 4 shows a configuration to exert functions according to the present embodiment (route generating function described later), and does not necessarily show all the functions implemented in the arithmetic unit 110.

The sensors and any other component that output information to the arithmetic unit 110 include a plurality of cameras 70 provided to the body and any other part of the motor vehicle 1 and configured to take images of the environment outside the vehicle (hereinafter, vehicle exterior environment); a plurality of radars 71 provided to the body and any other part of the motor vehicle 1 and configured to detect an object and the like outside the vehicle; a position sensor SW5 configured to detect the position of the motor vehicle 1 (motor vehicle position information) by using a global positioning system (GPS); a vehicle status sensor SW6 configured to acquire a status of the motor vehicle 1, which includes outputs from sensors that detect the behavior of the motor vehicle, such as a vehicle speed sensor, an acceleration sensor, and a yaw rate sensor; and an occupant status sensor SW7 including an in-vehicle camera and the like and configured to acquire a status of an occupant in the motor vehicle 1. In addition, the arithmetic unit 110 receives communication information from another motor vehicle positioned around the subject vehicle or traffic information from a navigation system, which is received by a vehicle exterior communication unit 72.

The cameras 70 are arranged to image the surroundings of the motor vehicle 1 at 360° in the horizontal direction. Each camera 70 captures optical images showing the environment outside the vehicle to generate image data. Each camera 70 then outputs the image data generated to the arithmetic unit 110. The cameras 70 are examples of an information acquisition unit that acquires information of the vehicle exterior environment.

The image data acquired by each camera 70 is also input to a human machine interface (HMI) unit 600, in addition to the arithmetic unit 110. The HMI unit 600 displays information based on the image data acquired, on a display device or the like in the vehicle.

The radars 71 are arranged so that the detection range covers 360° of the motor vehicle 1 in the horizontal direction, similarly to the cameras 70. The type of the radars 71 is not particularly limited. For example, a millimeter wave radar or an infrared radar can be adopted. The radars 71 are examples of an information acquisition unit that acquires information of the vehicle exterior environment.

During the assist driving or the autonomous driving, the arithmetic unit 110 sets a traveling route of the motor vehicle 1 and sets a target motion of the motor vehicle 1 so as to follow the traveling route of the motor vehicle 1. The arithmetic unit 110 includes a vehicle exterior environment recognition unit 111 that recognizes the vehicle exterior environment based on outputs from the cameras 70 and the like to set a target motion of the motor vehicle 1, a candidate route generation unit 112 that calculates one or more candidate routes travelable by the motor vehicle 1 in accordance with the vehicle exterior environment recognized by the vehicle exterior environment recognition unit 111, a vehicle behavior estimation unit 113 that estimates a behavior of the motor vehicle 1 based on an output from the vehicle status sensor SW6, an occupant behavior estimation unit 114 that estimates a behavior of an occupant of the motor vehicle 1 based on an output from the occupant status sensor SW7, a route determination unit 115 that determines a route to be traveled by the motor vehicle 1, and a vehicle motion determination unit 116 that determines a target motion of the motor vehicle 1 for following the route determined by the route determination unit 115.

The arithmetic unit 110 further includes a driving force calculation unit 117 that calculates a target physical amount corresponding to a driving force for achieving the target motion determined by the vehicle motion determination unit 116, a braking force calculation unit 118 that calculates a target physical amount corresponding to a braking force, and the steering controller 129. The steering controller 129 includes a steering amount calculation unit 119 that calculates a target physical amount corresponding to a steering amount for achieving the target motion determined by the vehicle motion determination unit 116, generates a control signal for controlling the steering devices, and directly outputs the generated control signal to the steering device driver 500. The steering devices as used herein conceptually include, in addition to steering-related actuators including the EPAS device 42, components for directly driving such actuators (e.g., the steering device driver 500).

The candidate route generation unit 112, the vehicle behavior estimation unit 113, the occupant behavior estimation unit 114, and the route determination unit 115 constitute a route setting unit configured to set the route to be traveled by the motor vehicle 1, in accordance with the vehicle exterior environment recognized by the vehicle exterior environment recognition unit 111.

In addition, as safety functions, the arithmetic unit 110 includes a rule-based route generation unit 120 configured to recognize an object outside the vehicle according to a predetermined rule and generate a traveling route that avoids the object, and a backup unit 130 configured to generate a traveling route that guides the motor vehicle 1 to a safety area such as a road shoulder.

### <Vehicle Exterior Environment Recognition Unit>

The vehicle exterior environment recognition unit 111 receives outputs from the cameras 70 and the radars 71 which are mounted on the motor vehicle 1 and recognizes the vehicle exterior environment. The recognized vehicle exterior environment includes at least a road and an obstacle. Here, it is assumed that the vehicle exterior environment recognition unit 111 estimates the motor vehicle environment including the road and the obstacle by comparing the 3-dimensional information of the surroundings of the motor vehicle 1 with a vehicle external environment model, based on data from the cameras 70 and the radars 71. The vehicle external environment model is, for example, a learned model generated by deep learning, and allows recognition of a road, an obstacle, and the like with respect to 3-dimensional information of the surroundings of the motor vehicle 1.

For example, the vehicle exterior environment recognition unit 111 identifies a free space, that is, an area without an object, by processing images captured by the cameras 70. In this image processing, for example, a learned model generated by deep learning is used. Then, a 2-dimensional map representing the free space is generated. In addition, the vehicle exterior environment recognition unit 111 acquires information on objects around the motor vehicle 1 from the outputs of the radars 71. This information is positioning information containing the position, the speed, and any other element of the object. Then, the vehicle exterior environment recognition unit 111 combines the 2-dimensional map thus generated with the positioning information of the object to generate a 3-dimensional map representing the surroundings of the motor vehicle 1. This process uses information of the installation positions of and the shooting directions of the cameras 70, and information of the installation positions of and the transmission direction of the radars 71. The vehicle exterior environment recognition unit 111 then compares the generated 3-dimensional map with the vehicle external environment model to estimate the motor vehicle environment including the road and the obstacle. Note that the deep learning uses a multilayer neural network (deep neutral network (DNN)). An example of the multilayer neural network is a convolutional neural network (CNN).

### <Candidate Route Generation Unit>

The candidate route generation unit 112 generates candidate routes that can be traveled by the motor vehicle 1, based on an output from the vehicle exterior environment recognition unit 111, an output from the position sensor SW5, and information transmitted from the vehicle exterior communication unit 72. For example, the candidate route generation unit 112 generates a traveling route that avoids the obstacle recognized by the vehicle exterior environment recognition unit 111, on the road recognized by the vehicle exterior environment recognition unit 111. The output from the vehicle exterior environment recognition unit 111 includes, for example, traveling road information related to a traveling road on which the motor vehicle 1 travels. The traveling road information includes information related to the shape of the traveling road itself and information related to objects on the traveling road. The information related to the shape of the traveling road includes the shape of the traveling road (whether it is straight or curved, and the curvature), the width of the traveling road, the number of lanes, and the width of each lane. The information related to the objects includes the positions and speeds of the objects relative to the motor vehicle, and the attributes (e.g., the type or the moving directions) of the objects. Examples of the object types include a motor vehicle, a pedestrian, a road, and a section line.

Here, it is assumed that the candidate route generation unit 112 calculates a plurality of candidate routes by means of a state lattice method, and selects one or more candidate routes from among these candidate routes based on a route cost of each candidate route. However, the routes may be calculated by means of a different method.

The candidate route generation unit 112 sets a virtual grid area on the traveling road based on the traveling road information. The grid area has a plurality of grid points. Each grid point identifies the position on the traveling road. The candidate route generation unit 112 sets a predetermined grid point as a destination. Then, a plurality of candidate routes are calculated by a route search involving a plurality of grid points in the grid area. In the state lattice method, a route branches from a certain grid point to random grid points ahead in the traveling direction of the motor vehicle. Therefore, each candidate route is set so as to sequentially pass a plurality of grid points. Each candidate route includes time information indicating a time of passing each grid point, speed information related to the speed, acceleration, and any other element at each grid point, and information related to other motor vehicle motions.

The candidate route generation unit 112 selects one or more traveling routes from the plurality of candidate routes based on the route cost. The route cost herein includes, for example, the lane-centering degree, the acceleration of the motor vehicle, the steering angle, and the possibility of collision. Note that, when the candidate route generation unit 112 selects a plurality of traveling routes, the route determination unit 115 selects one of the traveling routes.

### <Vehicle Behavior Estimation Unit>

The vehicle behavior estimation unit 113 measures a status of the motor vehicle, from the outputs of sensors which detect the behavior of the motor vehicle, such as a vehicle speed sensor, an acceleration sensor, and a yaw rate sensor. The vehicle behavior estimation unit 113 generates a six-degrees-of-freedom (i.e., 6DoF) model of the vehicle indicating the behavior of the motor vehicle.

Here, the 6DoF model of the vehicle is obtained by modeling acceleration along three axes, namely, in the "forward/backward (surge)", "left/right (sway)", and "up/down (heave)" directions of the traveling motor vehicle, and the angular velocity along the three axes, namely, "pitch", "roll", and "yaw". That is, the 6DoF model of the vehicle is a numerical model not grasping the motor vehicle motion only on the plane (the forward/backward and left/right directions (i.e., the movement along the X-Y plane) and the yawing (along the Z-axis)) according to the classical motor vehicle motion engineering but reproducing the behavior of the motor vehicle using six axes in total. The motor vehicle motions along the six axes further include the pitching (along the Y-axis), rolling (along the X-axis) and the movement along the Z-axis (i.e., the up/down motion) of the vehicle body mounted on the four wheels with the suspension interposed therebetween.

The vehicle behavior estimation unit 113 applies the 6DoF model of the vehicle to the traveling route generated by the candidate route generation unit 112 to estimate the behavior of the motor vehicle 1 when following the traveling route.

### <Occupant Behavior Estimation Unit>

The occupant behavior estimation unit 114 specifically estimates the driver's health condition and emotion from a detection result from the occupant status sensor SW7. Examples of the health conditions include good condition, slightly tired condition, poor condition, and less conscious condition. Examples of the emotions include happy, normal, bored, annoyed, and uncomfortable emotions.

For example, the occupant behavior estimation unit 114 extracts a face image of the driver from an image captured by a camera installed inside the vehicle cabin, and identifies the driver. The extracted face image and information of the identified driver are provided as inputs to a human model. The human model is, for example, a learned model generated by deep learning, and outputs the health condition and the emotion of each person who may be the driver, from the face image. The occupant behavior estimation unit 114 outputs the health condition and the emotion of the driver output by the human model.

In addition, in a case of adopting a bio-information sensor, such as a skin temperature sensor, a heartbeat sensor, a blood flow sensor, and a perspiration sensor, as the occupant status sensor SW7 for acquiring information of the driver, the occupant behavior estimation unit 114 measures the bio-information of the driver from the output from the bio-information sensor. In this case, the human model uses the bio-information as the input, and outputs the health condition and the emotion of each person who may be the driver. The occupant behavior estimation unit 114 outputs the health condition and the emotion of the driver output by the human model.

In addition, as the human model, a model that estimates an emotion of a human in response to the behavior of the motor vehicle 1 may be used for each person who may be the driver. In this case, the model may be constructed by managing, in time sequence, the outputs of the vehicle behavior estimation unit 113, the bio-information of the driver, and the estimated emotional conditions. This model allows, for example, the relationship between changes in the driver's emotion (the degree of wakefulness) and the behavior of the motor vehicle to be predicted.

The occupant behavior estimation unit 114 may include a human body model as the human model. The human body model specifies, for example, the weight of the head (e.g., 5 kg) and the strength of the muscles around the neck supporting against G-forces in the front, back, left, and right directions. The human body model outputs a predicted physical condition and subjective viewpoint of the occupant, when a motion (acceleration G-force or jerk) of the vehicle body is input. Examples of the physical condition of the occupant include comfortable /moderate /uncomfortable conditions, and examples of the subjective viewpoint include whether a certain event is unexpected or predictable. For example, a vehicle behavior that causes the head to lean backward even slightly is uncomfortable for an occupant. Therefore, a traveling route that causes the head to lean backward can be avoided by referring to the human body model. On the other hand, a vehicle behavior that causes the head of the occupant to lean forward in a bowing manner does not immediately lead to discomfort. This is because the occupant is easily able to resist such a force. Therefore, such a traveling route that causes the head to lean forward may be selected. Alternatively, referring to the human body model allows a target motion to be determined so that, for example, the head of the occupant does not swing, or to be dynamically determined so that the occupant is active.

The occupant behavior estimation unit 114 applies a human model to the vehicle behavior estimated by the vehicle behavior estimation unit 113 to estimate a change in the health conditions or the feeling of the current driver with respect to the vehicle behavior.

### <Route Determination Unit>

The route determination unit 115 determines the route along which the motor vehicle 1 is to travel, based on an output from the occupant behavior estimation unit 114. If the number of routes generated by the candidate route generation unit 112 is one, the route determination unit 115 determines that route as the route to be traveled by the motor vehicle 1. If the candidate route generation unit 112 generates a plurality of routes, a route that an occupant (in particular, the driver) feels most comfortable with, that is, a route that the driver does not perceive as a redundant route, such as a route too cautiously avoiding an obstacle, is selected out of the plurality of candidate routes, in consideration of an output from the occupant behavior estimation unit 114.

### <Rule-Based Route Generation Unit>

The rule-based route generation unit 120 recognizes an object outside the vehicle in accordance with a predetermined rule based on outputs from the cameras 70 and radars 71, without use of deep learning, and generates a traveling route that avoids such an object. Similarly to the candidate route generation unit 112, it is assumed that the rule-based route generation unit 120 also calculates a plurality of candidate routes by means of the state lattice method, and selects one or more candidate routes from among these candidate routes based on a route cost of each candidate route. In the rule-based route generation unit 120, the route cost is calculated based on, for example, a rule of preventing the vehicle from entering an area within several meters from the object. Another technique may be used for calculation of the route also in this rule-based route generation unit 120.

Information of a route generated by the rule-based route generation unit 120 is input to the vehicle motion determination unit 116.

### <Backup Unit>

The backup unit 130 generates a traveling route that guides the motor vehicle 1 to a safe area such as the road shoulder, based on outputs from the cameras 70 and radars 71, in an occasion of failure of a sensor or any other component, or when the occupant is not feeling well. For example, from the information given by the position sensor SW5, the backup unit 130 sets a safety area in which the motor vehicle 1 can be stopped in case of emergency, and generates a traveling route to reach the safety area. Similarly to the candidate route generation unit 112, it is assumed that the backup unit 130 also calculates a plurality of candidate routes by means of the state lattice method, and selects one or more candidate routes from among these candidate routes based on a route cost of each candidate route. Another technique may be used for calculation of the route also in this backup unit 130.

Information of a route generated by the backup unit 130 is input to the vehicle motion determination unit 116.

### <Vehicle Motion Determination Unit>

The vehicle motion determination unit 116 determines a target motion on a traveling route determined by the route determination unit 115. The target motion means steering and acceleration/deceleration to follow the traveling route. In addition, with reference to the 6DoF model of the vehicle, the target motion determination unit 115 calculates the motion of the vehicle body on the traveling route selected by the route determination unit 115.

The vehicle motion determination unit 116 determines the target motion to follow the traveling route generated by the rule-based route generation unit 120.

The vehicle motion determination unit 116 determines the target motion to follow the traveling route generated by the backup unit 130.

When the traveling route determined by the route determination unit 115 significantly deviates from a traveling route generated by the rule-based route generation unit 120, the vehicle motion determination unit 116 selects the traveling route generated by the rule-based route generation unit 120 as the route to be traveled by the motor vehicle 1.

In an occasion of failure of sensors or any other component (in particular, cameras 70 or radars 71) or in a case where the occupant is not feeling well, the vehicle motion determination unit 116 selects the traveling route generated by the backup unit 130 as the route to be traveled by the motor vehicle 1.

### <Physical Amount Calculation Unit>

A physical amount calculation unit includes a driving force calculation unit 117 and a braking force calculation unit 118. To achieve the target motion, the driving force calculation unit 117 calculates a target driving force to be generated by the powertrain devices (and the transmission 20). To achieve the target motion, the braking force calculation unit 118 calculates a target braking force to be generated by the brake device 30.

### <Steering Controller>

The steering controller 129 includes the steering amount calculation unit 119 that calculates a target steering amount to be generated by the steering system 40 to achieve the target motion, and generates a control signal for controlling the steering devices based on the target steering amount calculated by the steering amount calculation unit 119. The signal output from the steering controller 129 is input to the steering device driver 500, which drives the steering devices (e.g., the EPAS device 42).

The steering controller 129 is configured to output, to the driving force calculation unit 117 and the braking force calculation unit 118, information for control to allow the "steering devices" to coordinate with the "drive devices and braking devices." Specifically, the steering controller 129 shares information related to the physical amounts calculated by the steering amount calculation unit 119 and information on how the steering controller controls the steering devices with the driving force calculation unit 117 and the braking force calculation unit 118, and is configured to be capable of calculating associated target physical amounts so as to be capable of executing control to allow traveling devices to cooperate with one another.

Thus, for example, while a road surface is slippery, so-called traction control required to reduce the rotation of the wheels to prevent the wheels from spinning can be suitably accommodated. Specifically, to reduce spinning of the wheels, the output of the powertrain may be reduced, or the braking force of the brake device 30 may be used. However, if the driving force calculation unit 117 and the braking force calculation unit 118 respectively set the driving force to be generated by the powertrain and the braking force to be generated by the brake device 30 to associated optimum values, the running performance of the motor vehicle can be stabilized.

When the motor vehicle 1 is to corner, the driving force calculation unit 117 calculates a target driving force based on the driving state of the motor vehicle (the driving state determined by the vehicle motion determination unit 116), calculates the amount of the driving force reduced in response to the target steering amount calculated by the steering amount calculation unit 119, and then calculates a final target driving force of the motor vehicle in response to the target driving force and the amount of the driving force reduced. This allows a deceleration corresponding to the target steering amount to be produced. As a result, rolling and pitching that causes a front portion of the motor vehicle 1 to move downward are induced in synchronization with each other to give rise to diagonal rolling. Giving rise to the diagonal rolling increases the load applied to the outer front wheel 50. This allows the motor vehicle 1 to corner with small steering angle, and can reduce the rolling resistance to the motor vehicle 1.

In addition, if, for example, when the steering angle is changed during cornering, the road surface condition recognized by the vehicle exterior environment recognition unit 111 is assumed to be slippery (e.g., in the event of rain), understeer, i.e., a situation where a driving line curves outward, is assumed to occur. Thus, control can be performed so that braking the inner wheels while reducing the output of the engine 10 reduces skidding of the front wheels. Conversely, if the road surface condition recognized by the vehicle exterior environment recognition unit 111 is likely to allow the grip of tires on the road surface to be stronger than expected (e.g., if the road surface is very new in fine weather), oversteer, i.e., a situation where the driving line curves inward, is assumed to occur. Thus, control can be performed so that braking the outer wheels reduces skidding of rear wheels.

### <Peripheral Device Operation Setting Unit>

A peripheral device operation setting unit 140 sets operations of body-related devices of the motor vehicle 1, such as lamps and doors, based on outputs from the vehicle motion determination unit 116. The peripheral device operation setting unit 140 determines, for example, the directions of lamps, while the motor vehicle 1 follows the traveling route determined by the route determination unit 115. In addition, for example, at a time of guiding the motor vehicle 1 to the safety area set by the backup unit 130, the peripheral device operation setting unit 140 sets operations so that the hazard lamp is turned on and the doors are unlocked after the motor vehicle 1 reaches the safety area.

### <Output Destination of Arithmetic Unit>

An arithmetic result of the arithmetic unit 110 is output to the powertrain ECU 200, the brake microcomputer 300, the steering device driver 500, and a body-related microcomputer 600. Specifically, information related to the target driving force calculated by the driving force calculation unit 117 is input to the powertrain ECU 200. Information related to the target braking force calculated by the braking force calculation unit 118 is input to the brake microcomputer 300. A control signal from the steering controller 129 is input to the steering device driver 500. Information related to the operations of the body-related devices set by the peripheral device operation setting unit 140 is input to the body-related microcomputer 600.

As described hereinabove, the powertrain ECU 200 calculates fuel injection timing for the injector 12 and ignition timing for the spark plug 13 so as to achieve the target driving force, and outputs control signals to these relevant traveling devices. The brake microcomputer 300 calculates a controlled variable of the brake actuator 33 so as to achieve the target driving force, and outputs a control signal to the brake actuator 33. The steering device driver 500 drives the EPAS device 42 based on the control signal from the steering controller 129.

As described hereinabove, in the present embodiment, the arithmetic unit 110 calculates the target physical amounts to be output from the drive devices and the braking devices out of the drive devices, the braking devices, and the steering devices, and the controlled variables of these devices are calculated by the powertrain ECU 200 and the brake microcomputer 300.

As can be seen, the arithmetic unit 110 calculates rough target physical amounts corresponding to the exterior environment, and while final control performed by the powertrain ECU 200 and the brake microcomputer 300 achieves autonomous driving corresponding to the exterior environment, control requiring quick response to the behavior of the vehicle can be performed by the powertrain ECU 200 and the brake microcomputer 300. Thus, while a target motion of the whole motor vehicle that may be optimum at every moment is determined, and the associated microcomputer is instructed to achieve the target motion, a process requiring quick response can be performed using the microcomputer's own judgment. For example, in situations such as a situation where the arithmetic unit 110 is disposed in the vehicle cabin, the trunk space, or any other space, and while the powertrain ECU 200 is disposed near devices that are driven by the powertrain ECU 200, the brake microcomputer 300 is disposed near devices that are driven by the brake microcomputer 300, the communication rate between the arithmetic unit 110 and each of the powertrain ECU 200 and the brake microcomputer 300 may form a bottleneck in the quick response. To address this problem, the configuration described herein can provide control that does not depend on the communication rate between the arithmetic unit 110 and each of the powertrain ECU 200 and the brake microcomputer 300, i.e., both of optimal control and quick response control.

Furthermore, the steering controller 129 of the arithmetic unit 110 is configured to calculate the target physical amounts to be output from the steering devices out of the drive devices, the braking devices, and the steering devices, generate a control signal for achieving the target physical amounts, and directly control the steering device driver 500.

As can be seen, the control related to the steering that triggers a motion of the motor vehicle is incorporated into the arithmetic unit 110, which generates the control signal for controlling the steering devices as well, and the target physical amounts and control information related to the control are output to the driving force calculation unit 117 and the braking force calculation unit 118. This can increase the control accuracy of each of the actuators.

In addition, the steering controller 129 is configured to directly control the steering devices. This allows the processing speed to be faster than in a situation where the arithmetic unit 110 calculates only the target physical amounts, and the arithmetic results are output to, and processed by, a microcomputer for steering amount control.

Note that the response speed of the steering devices required for quick response control is typically lower than the response speeds of the driving devices and the braking devices. Thus, even in situations such as a situation where the arithmetic unit 110 is apart from the steering devices, as long as the communication rate between the arithmetic unit 110 and the steering devices is adapted to vehicle use under present or future conditions, the configuration of this application can also adequately accommodate quick response of the steering devices.

### <Other Control Manners>

The driving force calculation unit 117, the braking force calculation unit 118, and the steering controller 129 may be configured to modify the target driving force and other associated elements in accordance with the status of the driver of the motor vehicle 1, during the assist driving of the motor vehicle 1. For example, when the driver enjoys driving (when the driver feels "happy"), the target driving force and other associated elements may be reduced to make driving as close as possible to manual driving. On the other hand, when the driver is not feeling well, the target driving force and other associated elements may be increased to make the driving as close as possible to the autonomous driving.

### (Other Embodiments)

The present disclosure is not limited to the embodiments described above, and may be modified within the scope of the claims.

For example, in the above-described embodiments, the route determination unit 115 determines the route to be travelled by the motor vehicle 1. However, the present disclosure is not limited to this, and the route determination unit 115 may be omitted. In this case, the vehicle motion determination unit 116 may determine the route to be traveled by the motor vehicle 1. That is, the vehicle motion determination unit 116 may serve as a part of the route setting unit as well as a target motion determination unit.

The embodiment described above is merely an example in nature, and the scope of the present invention should not be interpreted in a limited manner.

### INDUSTRIAL APPLICABILITY

The present invention is usable as a motor vehicle cruise controller to control traveling of a motor vehicle.

### DESCRIPTION OF REFERENCE CHARACTERS

- 1: Motor Vehicle
- 100: Motor Vehicle Cruise Control System
- 110: Arithmetic Unit
- 111: Vehicle Exterior Environment Recognition Unit
- 112: Route Generation Unit (Route Setting Unit)
- 113: Vehicle Behavior Estimation Unit (Route Setting Unit)
- 114: Occupant Behavior Estimation Unit (Route Setting Unit)
- 115: Route Determination Unit (Route Setting Unit)
- 116: Vehicle Motion Determination Unit (Target Motion determination unit)
- 117: Driving Force Calculation Unit (Physical Amount Calculation Unit)
- 118: Braking Force Calculation Unit (Physical Amount Calculation Unit)
- 119: Steering Amount Calculation Unit (Physical Amount Calculation Unit)
- 129: Steering Controller
- 200: Powertrain ECU (Driving Microcomputer)
- 300: Brake Microcomputer (Braking Microcomputer)
- 500: Steering Device Driver (Steering Device)

## Claims

1. A travel control system for controlling traveling of a motor vehicle, comprising:
an arithmetic unit (110) for controlling traveling of a motor vehicle, comprising:
a vehicle exterior environment recognition unit (111) configured to recognize a vehicle exterior environment based on an output from an information acquisition unit configured to acquire information of the vehicle exterior environment;
a route setting unit (115) configured to set a route to be traveled by the motor vehicle, in accordance with the vehicle exterior environment recognized by the vehicle exterior environment recognition unit (111);
a target motion determination unit (116) configured to determine a target motion of the motor vehicle to follow the route set by the route setting unit (115);
a driving force calculation unit (117) configured to calculate a target physical amount corresponding to a driving force for achieving the target motion, and output the target physical amount calculated to a driving microcomputer (200) configured to control a driving device (10), the driving device being configured to produce a driving force;
a braking force calculation unit (118) configured to calculate another target physical amount corresponding to a braking force for achieving the target motion, and output the another target physical amount calculated to a braking microcomputer (300) configured to control a braking device (30), the braking device being configured to produce a braking force; and
a steering controller (129) configured to calculate still another target physical amount corresponding to a steering amount for achieving the target motion, generate a control signal for controlling a steering device configured to produce a steering amount based on the still another target physical amount calculated, directly output the control signal to the steering device (500), and being configured to output, to the driving force calculation unit (117) and the braking force calculation unit (118), information for use to perform control that allows the steering device (500) to coordinate with the driving and braking devices (10, 30);
the driving microcomputer (200) configured to receive an output of the driving force calculation unit (117) to control the driving device (10);
the braking microcomputer (300) configured to receive an output of the braking force calculation unit (118) to control the braking device (30); and
the driving microcomputer (200) and the braking microcomputer (300) being configured to be capable of communicating with each other and to share information for use to perform control that allows the driving device (10) to coordinate with the braking device (30) with each other.

## Patentansprüche

1. Fahrsteuersystem zum Steuern des Fahrens eines Kraftfahrzeugs, umfassend:
eine arithmetische Einheit (110) zum Steuern des Fahrens eines Kraftfahrzeugs, umfassend:
eine Fahrzeugaußenumgebungserkennungseinheit (111), die konfiguriert ist, um eine Fahrzeugaußenumgebung basierend auf einer Ausgabe von einer Informationsgewinnungseinheit zu erkennen, die konfiguriert ist, um Informationen der Fahrzeugaußenumgebung zu gewinnen;
eine Routeneinstellungseinheit (115), die konfiguriert ist, um eine Route, die von dem Kraftfahrzeug zu fahren ist, gemäß der Fahrzeugaußenumgebung, die von der Fahrzeugaußenumgebungserkennungseinheit (111) erkannt wird, einzustellen;
eine Zielbewegungsbestimmungseinheit (116), die konfiguriert ist, um eine Zielbewegung des Kraftfahrzeugs zu bestimmen, um der Route zu folgen, die von der Routeneinstellungseinheit (115) eingestellt wird;
eine Antriebskraftberechnungseinheit (117), die konfiguriert ist, um eine physikalische Zielgröße zu berechnen, die einer Antriebskraft zum Erzielen der Zielbewegung entspricht, und die berechnete physikalische Zielgröße an einen Antriebsmikrocomputer (200) auszugeben, der konfiguriert ist, um eine Antriebsvorrichtung (10) zu steuern, wobei die Antriebsvorrichtung konfiguriert ist, um eine Antriebskraft zu produzieren;
eine Bremskraftberechnungseinheit (118), die konfiguriert ist, um eine andere physikalische Zielgröße zu berechnen, die einer Bremskraft zum Erzielen der Zielbewegung entspricht, und die andere berechnete physikalische Zielgröße an einen Bremsmikrocomputer (300) auszugeben, der konfiguriert ist, um eine Bremsvorrichtung (30) zu steuern, wobei die Bremsvorrichtung konfiguriert ist, um eine Bremskraft zu produzieren; und
eine Lenksteuerung (129), die konfiguriert ist, um noch eine andere physikalische Zielgröße zu berechnen, die einem Lenkbetrag zum Erzielen der Zielbewegung entspricht, ein Steuersignal zum Steuern einer Lenkvorrichtung zu erzeugen, die konfiguriert ist, um einen Lenkbetrag basierend auf der noch anderen berechneten physikalischen Zielgröße zu produzieren, und das Steuersignal direkt an die Lenkvorrichtung (500) auszugeben, und die konfiguriert ist, um an die Antriebskraftberechnungseinheit (117) und die Bremskraftberechnungseinheit (118) Informationen zur Verwendung zum Durchführen einer Steuerung, die der Lenkvorrichtung (500) ermöglicht, sich mit der Antriebs- und der Bremsvorrichtung (10, 30) abzustimmen, auszugeben;
wobei der Antriebsmikrocomputer (200) konfiguriert ist, um eine Ausgabe der Antriebskraftberechnungseinheit (117) zum Steuern der Antriebsvorrichtung (10) zu empfangen;
wobei der Bremsmikrocomputer (300) konfiguriert ist, um eine Ausgabe der Bremskraftberechnungseinheit (118) zum Steuern der Bremsvorrichtung (30) zu empfangen; und
wobei der Antriebsmikrocomputer (200) und der Bremsmikrocomputer (300) konfiguriert sind, um in der Lage zu sein, miteinander zu kommunizieren und Informationen zur Verwendung zum Durchführen einer Steuerung, die der Antriebsvorrichtung (10) ermöglicht, sich mit der Bremsvorrichtung (30) abzustimmen, miteinander zu teilen.

## Revendications

1. Système de commande de déplacement permettant de commander le déplacement d'un véhicule à moteur, le système comprenant :
une unité arithmétique (110) permettant de commander le déplacement d'un véhicule à moteur, l'unité arithmétique comprenant :
une unité (111) de reconnaissance d'environnement extérieur de véhicule, conçue pour reconnaître un environnement extérieur du véhicule sur la base d'une sortie émanant d'une unité d'acquisition d'informations conçue pour acquérir des informations de l'environnement extérieur du véhicule ;
une unité (115) de définition de route, conçue pour définir une route à être empruntée par le véhicule à moteur, conformément à l'environnement extérieur du véhicule reconnu par l'unité (111) de reconnaissance d'environnement extérieur de véhicule ;
une unité (116) de détermination de mouvement cible, conçue pour déterminer un mouvement cible du véhicule à moteur afin de suivre la route définie par l'unité (115) de définition de route ;
une unité (117) de calcul de force d'entraînement, conçue pour calculer une quantité physique cible correspondant à une force d'entraînement permettant d'obtenir le mouvement cible, et pour sortir la quantité physique cible calculée vers un microordinateur d'entraînement (200) conçu pour commander un dispositif d'entraînement (10), le dispositif d'entraînement étant conçu pour produire une force d'entraînement ;
une unité (118) de calcul de force de freinage, conçue pour calculer une autre quantité physique cible correspondant à une force de freinage permettant d'obtenir le mouvement cible, et pour sortir l'autre quantité physique cible calculée vers un microordinateur de freinage (300) conçu pour commander un dispositif de freinage (30), le dispositif de freinage étant conçu pour produire une force de freinage ; et
un dispositif de commande de braquage (129), conçu pour calculer encore une autre quantité physique cible correspondant à une quantité de braquage permettant d'obtenir le mouvement cible, pour générer un signal de commande permettant de commander un dispositif de braquage conçu pour produire une quantité de braquage sur la base de l'encore autre quantité physique cible calculée, pour sortir directement le signal de commande vers le dispositif de braquage (500), et étant conçu pour sortir, vers l'unité (117) de calcul de force d'entraînement et l'unité (118) de calcul de force de freinage, des informations à utiliser pour effectuer une commande permettant au dispositif de braquage (500) de se coordonner avec les dispositifs d'entraînement et de freinage (10, 30) ;
le microordinateur d'entraînement (200) étant conçu pour recevoir une sortie de l'unité (117) de calcul de force d'entraînement, afin de commander le dispositif d'entraînement (10) ;
le microordinateur de freinage (300) étant conçu pour recevoir une sortie de l'unité (118) de calcul de force de freinage, afin de commander le dispositif de freinage (30) ; et
le microordinateur d'entraînement (200) et le microordinateur de freinage (300) étant conçus pour pouvoir se mettre en communication l'un avec l'autre et pour partager des informations à utiliser pour effectuer une commande permettant au dispositif d'entraînement (10) de se coordonner avec le dispositif de freinage (30).
